# EUROPÄISCHE PATENTSCHRIFT

(11) **EP 1 690 026 B1**
(45) Veröffentlichungstag und Bekanntmachung des Hinweises auf die Patenterteilung: **03.09.2008**
(21) Anmeldenummer: 04801814.7
(22) Anmeldetag: 22.10.2004
(51) Int. Cl.: F16K 1/42, F16K 31/06, F02M 61/18

(54) **VENTIL ZUM STEUERN EINES FLUIDS**
VALVE FOR CONTROLLING A FLUID
SOUPAPE DE COMMANDE D'UN FLUIDE

(30) Priorität: 03.11.2003 DE 10351205
(43) Veröffentlichungstag der Anmeldung: 16.08.2006
(73) Patentinhaber: ROBERT BOSCH GMBH, 70442 Stuttgart (DE)
(72) Erfinder: MILLER, Frank, 74360 Ilsfeld (DE); OKRENT, Elmar, 71686 Remseck (DE)
(86) Internationale Anmeldenummer: PCT/EP2004/052638
(87) Internationale Veröffentlichungsnummer: WO 2005/043016

(56) Entgegenhaltungen:
- EP-A- 1 219 875
- GB-A- 2 147 949
- US-A- 3 902 695
- US-A- 4 813 610
- US-A- 5 011 113

## Beschreibung

### Stand der Technik

Die Erfindung geht von einem Ventil zum Steuern eines Fluids, insbesondere zum Steuern eines Gases, gemäß der im Oberbegriff des Patentanspruches 1 näher definierten Art aus.

Ventile dieser Art sind aus den Druckschriften GB2147949 und EP1219875 bereits bekannt.

Ein derartiges Ventil ist aus der Praxis bekannt und beispielsweise als Gassteuerventil bei einer Brennstoffzelle oder auch bei einem Gasmotor einsetzbar.

Das bekannte Ventil umfasst ein Ventilgehäuse, das mehrteilig aufgebaut sein kann und in dem eine Betätigungseinheit für einen Magnetanker angeordnet ist. Der Magnetanker ist in einer korrespondierend ausgebildeten, gegebenenfalls hülsenartigen Aufnahme des Ventilgehäuses axial verschiebbar geführt und mit einem Ventilschließglied versehen, das derart mit einem Ventilsitz zusammenwirkt, dass ein Fluidstrom durch mindestens eine Abströmöffnung steuerbar ist, die in einer Sitzplatte angeordnet ist und zu einer Abströmseite des Ventils führt. Zur Steuerung eines Gases ist an der dem Ventilsitz zugewandten Stirnseite des Ventilschließglieds eine elastische Dichtung angeordnet, die aus einem Elastomer, PEEK oder dergleichen besteht und bei geschlossenem Ventilschließglied an dem Ventilsitz anliegt. Die elastische Dichtung liegt hierbei im Wesentlichen vollflächig auf der dem Ventilschließglied zugewandten Fläche der Sitzplatte auf.

Bei Gasventilen besteht grundsätzlich das Problem, dass das zu steuernde, trockene und gasförmige Medium einen hohen Verschleiß im Ventilsitzbereich, d. h. im Dichtbereich, verursachen kann, was zu Veränderungen der Funktionswerte des Ventils und auch bei geschlossenem Ventilschließglied zu unzulässig hohen Leckraten führen kann.

Bei dem oben beschriebenen bekannten Ventil besteht des Weiteren das Problem, dass es aufgrund eines spielbedingten, schrägen Aufsetzens des Magnetankers zu Undichtigkeiten im Bereich des Ventilsitzes kommen kann. Insbesondere kann das schräge Aufsetzen des Magnetankers aufgrund hoher Flächenpressungen auch einen hohen Verschleiß der Dichtung während der Einsatzzeit des Ventils begründen. Ferner kann eine durch eine Fläche erfolgende Abdichtung der Abströmöffnung zu sich nachteilig auswirkenden Setzeffekten, wie beispielsweise einem Eindringender Dichtung in die Abströmöffnung, und weiteren nachteilhaften Veränderungen im Bereich der Abströmöffnung führen.

### Vorteile der Erfindung

Das erfindungsgemäße Ventil zum Steuern eines Fluids, insbesondere zum Steuern eines Gases, mit den Merkmalen des Patentanspruches 1, hat den Vorteil, dass eine Dichtheit des Ventils über dessen Lebensdauer auch bei Setzvorgängen oder bei einer Schiefstellung des Magnetankers bzw. des Ventilschließglieds gewährleistet ist, da das Dichtelement bei geschlossenem Ventilschließglied nicht vollflächig, sondern im Wesentlichen entlang von Kreislinien auf dem Ventilsitz aufliegt.

Die Geometrie des Ventilsitzes bestimmt die Dichtheit des Ventils. Ein Gasventil mit einem erfindungsgemäß ausgebildeten Ventilsitz bietet eine optimierte Sitzgeometrie, durch die über die Lebensdauer des Ventils in allen Betriebszuständen eine hohe Dichtheit und eine Dauerstabilität der Ventilfunktion gewährleistet ist.

Ein erfindungsgemäß ausgebildeter Ventilsitz, der einfach und kostengünstig herstellbar ist, bietet des Weiteren den Vorteil, dass ein Öffnungsvorgang des Magnetankers bzw. des Ventilschließglieds durch das zu steuernde Gas unterstützt wird, da dieses das Dichtelement stromauf des Ventilsitzes schon bei geschlossenem Ventilschließglied unterströmt. Es liegt also bei dem Ventil nach der Erfindung im Bereich des Ventilsitzes auch eine verbesserte Gasanströmung vor.

Durch die im Wesentlichen durch die Sitzgeometrie vorgegebene, auch bei tiefen Temperaturen vorliegende hohe Dichtheit des Ventilsitzes besteht bei dem Dichtelement eine breite Auswahl der einsetzbaren Materialien sowie eine große Formfreiheit.

Das Ventil nach der Erfindung ist insbesondere zur Massenstromregelung von Gasen wie Wasserstoff und Erdgas geeignet und kann beispielsweise bei einer Brennstoffzelle oder auch bei einem Gasmotor eingesetzt werden.

Beim Ventil gemäß der Erfindung haben die Absätze an der den Abströmöffnungen abgewandten Seite jeweils eine schräg abfallende Außenflanke. Die Außenflanken können jeweils als gerade abfallende Flächen, d. h. als konische Flächen, ausgebildet sein und in diesem Fall zusammen mit der Stirnfläche der Dichtung bzw. des Dichtelements einen spitzen Winkel einschließen.

Die Außenflanken haben auch einen gewölbten Querschnitt haben. Dieser gewölbte Querschnitt kann mit einem einheitlichen oder auch mit einem sich verändernden Radius versehen sein.

Zur Verbesserung des Strömungsverhaltens des mittels des erfindungsgemäßen Ventils gesteuerten Gases und zur Verrin-gerung des Verschleißes des Dichtelements weisen die Absätze an der der Abströmöffnung zugewandten Seite jeweils eine Innenflanke auf, die bevorzugt mit einem gewölbten Querschnitt bzw. einem Radius ausgebildet ist. Es ist aber auch denkbar, dass die innere Flanke aus einer im wesentlichen konischen Fläche besteht, welche in eine Fase des jeweiligen Absatzes übergeht bzw. aus einer derartigen Fase gebildet ist.

In der Regel sind die Stirnseiten der Absätze, an denen das Dichtelement bei geschlossenem Ventilschließglied zur Anlage kommt, gewölbt ausgebildet.

Durch die Absätze, deren Flanken von konischen Flächen bzw. Ebenen mit einem Neigungswinkel von beispielsweise 10° oder auch von gewölbten Flächen gebildet sind, ist gewährleistet, dass das Dichtelement des Ventilschließglieds stets flächig oder linienförmig auf dem Ventilsitz aufsitzt, wodurch eine hohe Dichtheit erreicht wird. Die Absätze können hierbei mit zueinander symmetrischen Querschnitten oder auch mit unterschiedlich ausgebildeten Flächen bzw. Wölbungen hergestellt sein.

Die vorstehend beschriebene Sitzgeometrie kann ein- oder mehrstufig hergestellt werden. Beispielsweise kann die Sitzgeometrie so hergestellt werden, dass die Sitzplatte zunächst nach einem Drehverfahren und anschließend nach einem Formschleifverfahren unter Einsatz eines Formdrehmeißels bearbeitet wird.

Insbesondere wenn die Sitzgeometrie nach einem Formschleifverfahren hergestellt wird, ist es zweckmäßig, dass beim Schleifen Riefen entstehen, die in bezug auf die Kreislinie, entlang der die Einspritzöffnungen angeordnet sind, konzentrisch und nicht radial verlaufen, was einen günstigen Einfluss auf die Ventildichtheit hat.

Durch konzentrisch verlaufende Riefen kann ein Unterwandern des Dichtelements durch das zu steuernde Gas verhindert werden, was insbesondere bei radial verlaufenden Riefen über die Lebensdauer des Ventils ein potentielles Undichtigkeitsrisiko darstellen würde.

Weitere Vorteile und vorteilhafte Ausgestaltungen des Gegenstandes nach der Erfindung sind der Beschreibung, der Zeichnung und den Patentansprüchen entnehmbar.

### Zeichnung

Vier Ausführungsbeispiele eines Ventils nach der Erfindung sind in der Zeichnung schematisch vereinfacht dargestellt und werden in der nachfolgenden Beschreibung näher erläutert. Es zeigen
Figur 1 einen vereinfachten Längsschnitt durch eine erste Ausführungsform eines Gasventils;
Figur 2 eine vergrößerte Darstellung des Bereichs II in Figur 1;
Figur 3 eine vergrößerte Darstellung des Bereichs III in Figur 2;
Figur 4 den in Figur 3 dargestellten Bereich des Gasventils nach Figur 1, jedoch vor Anwendung eines Feinschleifverfahrens;
Figur 5 einen alternativen Ventilsitz mit anliegendem Dichtelement;
Figur 6 die Ventilsitzgeometrie nach Figur 5 vor Anwendung eines Feinschleifverfahrens;
Figur 7 eine Herstellung der in Figur 5 dargestellten Ventilsitzgeometrie;
Figur 8 eine Draufsicht auf eine Ventilplatte mit der in Figur 5 dargestellten Ventilsitzgeometrie;
Figur 9 eine Längsschnittdarstellung einer dritten Ausführungsform einer Ventilsitzes eines Ventils der in Figur 1 dargestellten Art; und
Figur 10 eine Längsschnittdarstellung einer vierte Ausführungsform eines Ventilsitzes eines Ventils der in Figur 1 dargestellten Art vor Anwendung eines Feinschleifverfahrens.

### Beschreibung der Ausführungsbeispiele

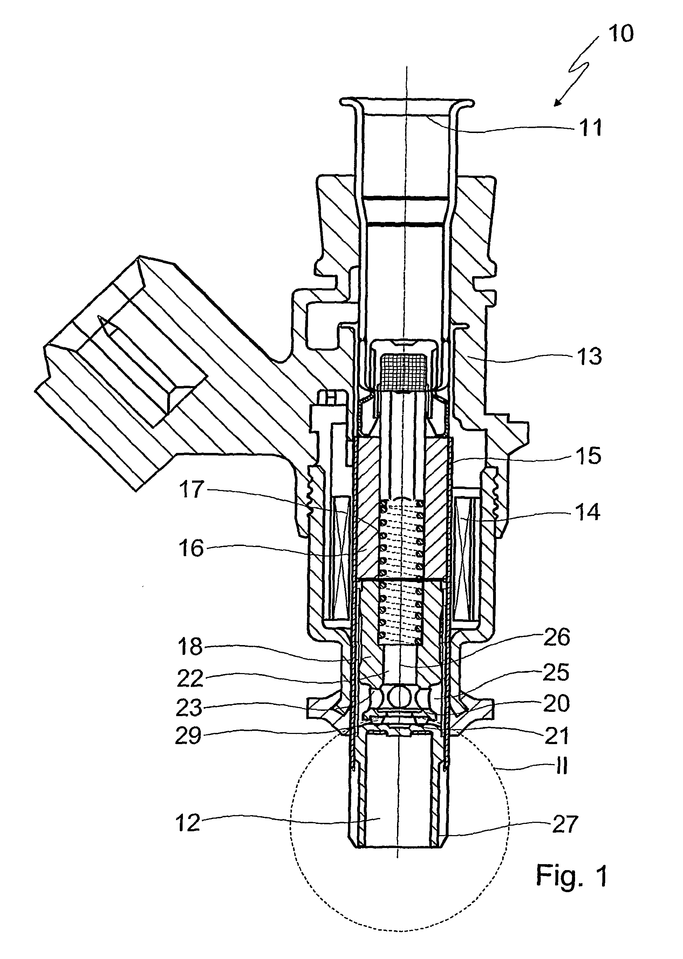

In Figur 1 ist ein Gasventil 10 dargestellt, das zum Einsatz bei einer Brennstoffzelle oder bei einem Gasmotor ausgelegt ist und zur Regelung eines Gasstromes aus beispielsweise Wasserstoff, LPG (Liquid Petroleum Gas) oder CNG (Compressed Natural Gas) von einer Zuströmseite 11 zu einer Abströmseite 12 dient.

Das Ventil 10 hat ein mehrteiliges Gehäuse 13, das eine Magnetspule 14 aufnimmt, welche eine Führungshülse 15 umgreift. In der Führungshülse 15 ist ein im Wesentlichen rohrförmiger Stopfen 16 fixiert, in den eine als Vorspannfeder dienende Spiralfeder 17 eingeschoben ist, die auf einen Magnetanker 18 wirkt, der längsverschieblich in der Führungshülse 15 geführt ist.

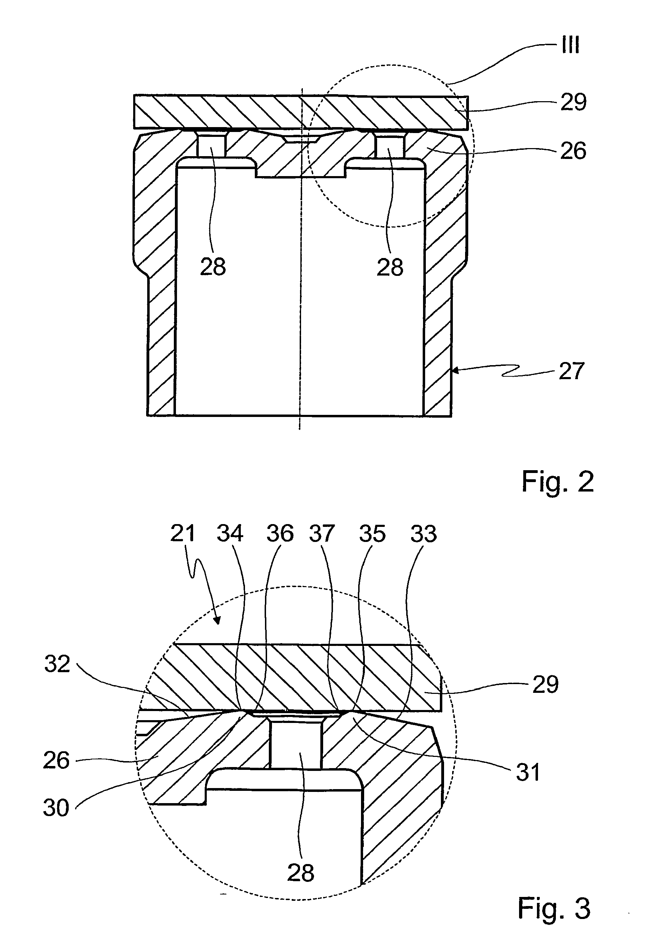

Der Magnetanker 18 ist im Wesentlichen rohrförmig ausgebildet und bildet an seiner der Vorspannfeder 17 abgewandten Seite ein Ventilschließglied 20, das stirnseitig mit einem in den Figuren 2 bis 4 näher dargestellten Ventilsitz 21 zusammenwirkt.

Ferner ist der Magnetanker 18 mit einem Innenraum 22 versehen, der mit der Zuströmseite 11 des Ventils 10 verbunden ist und von dem bei dem vorliegenden Ausführungsbeispiel radiale Abströmbohrungen 23 und eine axiale Abströmbohrung 24 abzweigen. Die radialen Abströmbohrungen 23 führen zu einem Hochdruckraum 25, der radial von der Führungshülse 15 begrenzt ist. Die axiale Abströmbohrung 24 führt an die Stirnseite des Magnetankers 18.

Wie insbesondere den Figuren 2 bis 4 zu entnehmen ist, ist der Ventilsitz 21 an einer als Sitzplatte ausgebildeten Bodenplatte 26 eines im Wesentlichen topfförmigen Bauteils 27 ausgebildet. Die Bodenplatte 26 ist mit einer Vielzahl an als Düsen ausgebildeten Abströmöffnungen 28 versehen, die bei geöffnetem Ventilschließglied bzw. Magnetanker 18 den Hochdruckraum 25 mit der Abströmseite 12 des Ventils 10 verbinden. Die Düsen bzw. Löcher 28 sind entlang einer Kreislinie angeordnet und werden bei geschlossenem Ventilschließglied bzw. Magnetanker 18 von einem Dichtungselement 29 abgedeckt, das aus einem Kunststoff, wie einem Elastomer, PEEK oder dergleichen, besteht, an der Stirnseite des Magnetankers 18 fixiert ist und auf dem Ventilsitz 21 aufliegt. Das Dichtelement 29 kann zur Steigerung der Querbeweglichkeit mit einer Beschichtung versehen sein, die beispielsweise aus PTFE besteht.

Der Ventilsitz 21 ist von einem ringförmigen inneren Absatz 30 und einem ringförmigen äußeren Absatz 31 gebildet, wobei die Abströmöffnungen 28 zwischen dem inneren Absatz 30 und dem äußeren Absatz 31 angeordnet sind. Die Absätze 30 und 31 haben an ihren den Abströmöffnungen 28 abgewandten Seiten jeweils eine Außenflanke 32 bzw. 33, die als gerade abfallende, konische Fläche ausgebildet ist und mit der Stirnfläche des Dichtungselements 29 einen Winkel von etwa 10 Grad einschließt. Die Außenflanken 32 und 33 gehen jeweils in eine im wesentlichen wulstartige Erhebung 34 bzw. 35 über, welche eine gewölbte Anschlagfläche des jeweiligen Absatzes 30 bzw. 31 bildet. An der den Düsen 28 zugewandten Seite gehen die gewölbten Stirnflächen 34 und 35 wiederum jeweils in eine beispielsweise mit einem Radius von 0,1 mm versehene gewölbte, schräg abfallende Innenflanke 36 bzw. 37 über.

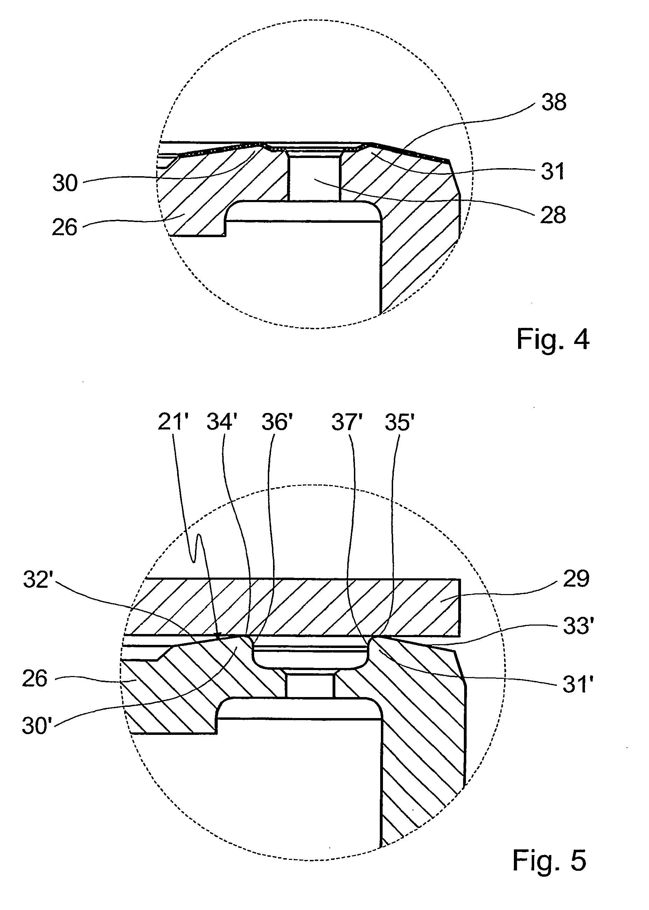

Zur Herstellung der insbesondere in Figur 3 dargestellten Geometrie des Ventilsitzes 21 wird vorliegend ein mehrstufiges Verfahren angewendet, bei dem zunächst eine in Fig. 4 dargestellte Grobkontur nach einem Drehverfahren hergestellt und dann ein in Fig. 4 mit der Bezugsziffer 38 versehener Bereich nach einem Feinschleifverfahren abgetragen wird, so dass die in Figur 3 dargestellte Oberflächenkontur des Ventilsitzes 21 erzeugt wird, bei welcher der innere Absatz 30 einen Querschnitt aufweist, der spiegelsymmetrisch zu dem Querschnitt des äußeren Absatzes 31 ausgebildet ist. Nach dem Feinschleifverfahren weist der Ventilsitz 21 Riefen auf, die im Wesentlichen konzentrisch zu den Absätzen 30 und 31 angeordnet sind.

In den Figuren 5 bis 8 ist eine alternative Ausführungsform einer erfindungsgemäß ausgebildeten Ventilsitzgeometrie bei einem Gasventil der in Figur 1 gezeigten Art dargestellt. Entsprechend dem Ausführungsbeispiel nach den Figuren 2 bis 4 hat das in den Figuren 5 bis 8 dargestellte Ausführungsbeispiel einen Ventilsitz 21', der aus einem ringförmigen inneren Absatz 30' und einem ringförmigen, äußeren Absatz 31' gebildet ist.

Die Absätze 30' und 31' haben jeweils an der den Abströmöffnungen 28 abgewandten Seite eine Außenflanke 32' bzw. 33', die als gerade abfallende, konische Fläche ausgebildet ist und mit der Stirnfläche des aus einem Elastomer bestehenden Dichtelements 29 einen Winkel von etwa 10 Grad einschließt. Die Außenflanken 32' und 33' gehen jeweils in eine wulstartige Erhebung 34' bzw. 35' über, die die Stirnfläche des jeweiligen Absatzes 30' bzw. 31' bildet und zur Anlage des Dichtelements 29 dient. Die wulstartigen Erhebungen 34' und 35' gehen jeweils über einen Radius an der den Abströmöffnungen 28 zugewandten Seite in eine steil abfallende Innenflanke-36' bzw. 37' über, die mit einer leichten Wölbung versehen ist.

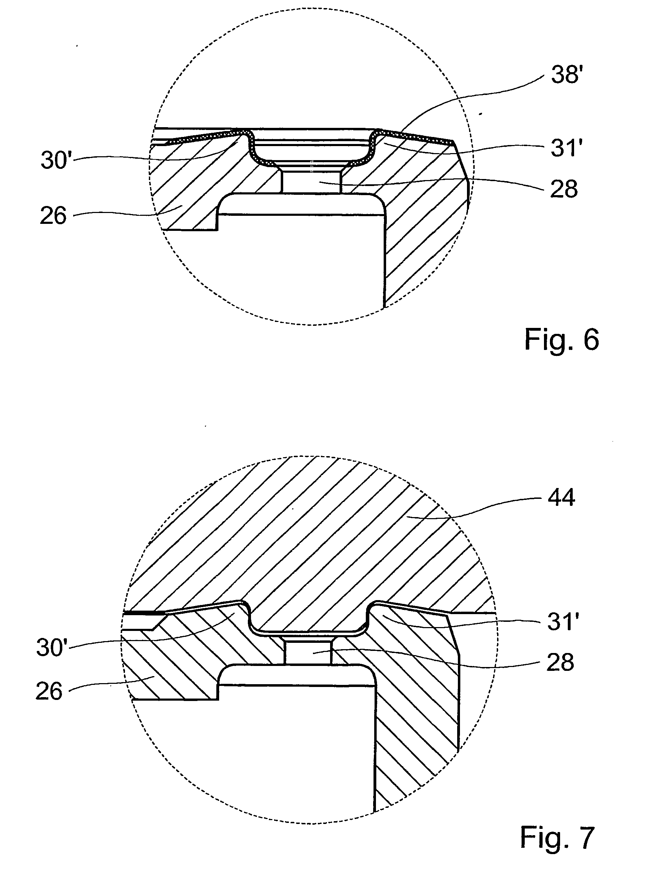

Die Herstellung des in Figur 5 detailliert dargestellten Ventilsitzes 21 erfolgt ebenfalls zweistufig, und zwar derart, dass zunächst an der Sitzplatte 26 eine Grobkontur hergestellt wird, die mit einem in Figur 6 mit dem Bezugszeichen 38' versehenen Bereich ausgebildet ist, der bei einem nachfolgenden Feinschleifverfahren abgetragen wird. Hierzu wird, wie Figur 7 zu entnehmen ist, beispielsweise ein Formdrehmeißel 44 eingesetzt, der auf die Grobkontur aufgesetzt wird und über eine Rotationsbewegung den in Figur 6 gezeigten Bereich 38' abträgt. Die Drehachse des Formdrehmeisels 44 bildet hier auch eine Achse 45 der ringförmigen Absätze 30' und 31'. Dadurch entstehen bei dem Formschleifverfahren an dem Ventilsitz 21' Riefen 46, die konzentrisch zu den Absätzen 30' und 31' verlaufen.

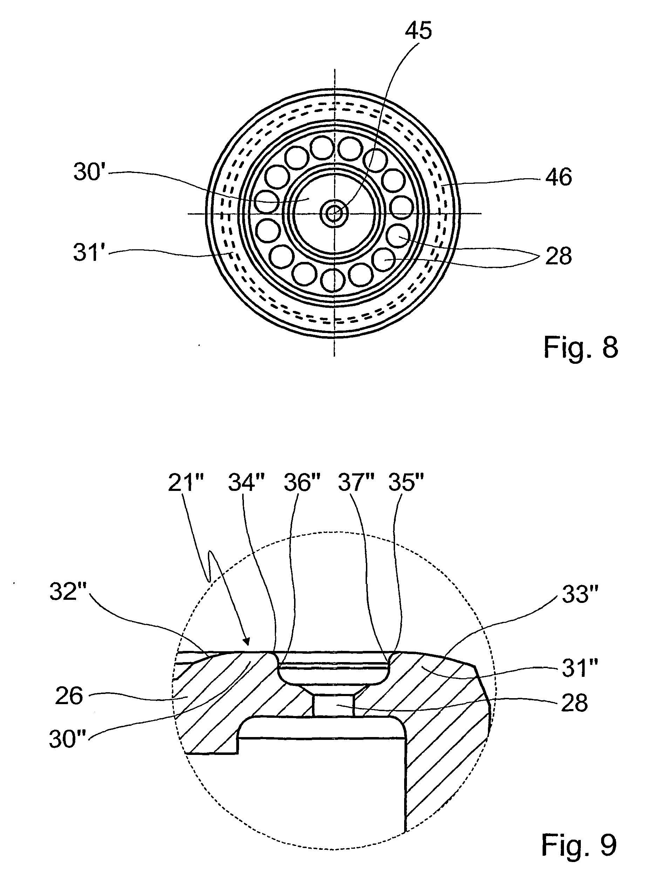

In Figur 9 ist eine weitere Ausführungsform eines Ventilsitzes 21'' eines Gasventils der in Figur 1 näher gezeigten Art dargestellt. Der Ventilsitz 21'' entspricht weitgehend dem Ventilsitz nach Figur 5, unterscheidet sich von diesem aber dadurch, dass er an den beiden Absätzen 30'' und 31'' Außenflanken 32'' bzw. 33'' aufweist, deren Querschnitt gewölbt, d. h. mit einem Radius versehen ist.

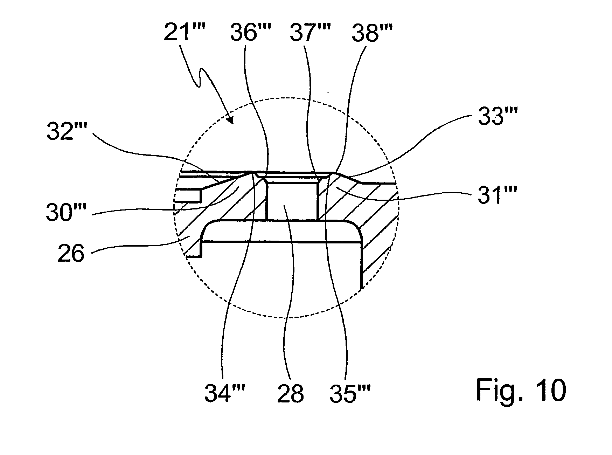

In Fig. 10 ist eine weitere Ausführungsform eines Ventilsitzes eines Ventils der in Figur 1 gezeigten Art vor einer Fein-Nachbearbeitung dargestellt. Dieser Ventilsitz ist ebenfalls aus einem inneren Absatz 30''' und einem äußeren Absatz 31''' gebildet, welche jeweils an der den Düsen 28 abgewandten Seite mit schräg abfallenden Flanken 32''' und 33''' versehen sind. An der den Düsen 28 zugewandten Seite sind die Absätze 30''' und 31''' jeweils mit einer als konische Fläche ausgebildeten, schräg abfallenden Innenflanke 36''' bzw. 37''' versehen.

Bei der Fein-Nachbearbeitung wird an den Absätzen 30''' und 31''' an der Stirnseite jeweils ein im Querschnitt dreieckiger Bereich 38''' abgetragen, so dass jeweils eine Stirnfläche 34''' bzw. 35''' entsteht, die im wesentlichen parallel zur Stirnfläche des in Figur 10 nicht abgebildeten Dichtelements ausgerichtet ist.

## Patentansprüche

1. Ventil zum Steuern eines Fluids, insbesondere zum Steuern eines Gases, umfassend ein Ventilgehäuse (13), das eine Betätigungseinheit (14) für einen Magnetanker (18) aufnimmt, der axial verschiebbar in dem Ventilgehäuse (13) geführt ist und mit einem Ventilschließglied (20) versehen ist, an dessen Stirnseite ein Dichtelement (29) angeordnet ist, das derart mit einem an einer Sitzplatte (26) ausgebildeten Ventilsitz (21, 21', 21", 21"') zusammenwirkt, dass ein Fluidstrom durch Abströmöffnungen (28) der Sitzplatte (26) steuerbar ist, wobei der Ventilsitz (21, 21', 21", 21"') von einem im Wesentlichen ringförmigen, inneren Absatz (30, 30', 30", 30"') und einem im Wesentlichen ringförmigen, äußeren Absatz (31, 31', 31", 31"') gebildet ist und die Abströmöffnungen zwischen dem inneren Absatz (30, 30', 30", 30"') und dem äußeren Absatz (31, 31', 31", 31"') angeordnet sind, wobei die Absätze (30, 30', 30", 30"', 31, 31', 31", 31"') an der den Abströmöffnungen (28) abgewandten Seite jeweils eine schräg abfallende Außenflanke (32, 32', 32", 32"', 33, 33', 33", 33"') aufweisen und
die Absätze (30, 30"', 31, 31"') an der den Abströmöffnungen (28) zugewandten Seite jeweils eine schräg abfallende Innenflanke (34, 34"', 35, 35"') aufweisen, die vorzugsweise mit einem Radius versehen ist,
**dadurch gekennzeichnet,**
**dass** die Absätze (30, 30', 30", 31, 31', 31") jeweils eine gewölbte Stirnfläche (34, 34', 34", 35, 35', 35") aufweisen und
die schräg abfallenden Außenflanken (32, 32', 32", 32"', 33, 33', 33", 33"') einen spitzeren Winkel mit der Stirnfläche des Dichtelements (29) einschließen als die schräg abfallenden Innenflanken (34, 34"', 35, 35"') gegenüber der Stirnfläche des Dichtelements (29).

2. Ventil nach Anspruch 1,
**dadurch gekennzeichnet,**
**dass** die schräg abfallenden Außenflanken (32, 32', 32", 32"', 33, 33', 33", 33"') jeweils als konische Fläche ausgebildet sind.

3. Ventil nach Anspruch 1,
**dadurch gekennzeichnet,**
**dass** die schräg abfallenden Außenflanken (32", 33") jeweils mit einem gewölbten Querschnitt ausgebildet sind.

4. Ventil nach Anspruch 1,
**dadurch gekennzeichnet,**
**dass** der innere Absatz (30, 30', 30") einen Querschnitt aufweist, der im Wesentlichen spiegelsymmetrisch zu dem Querschnitt des äußeren Absatzes (31, 31', 31") ausgebildet ist.

5. Ventil nach einem der Ansprüche 1 bis 3,
**dadurch gekennzeichnet,**
**dass** der Ventilsitz (21, 21', 21", 21"') nach einem Formbearbeitungsverfahren, wie einem Dreh-, einem Schleif- oder einem Erodierverfahren, hergestellt ist und Riefen (46) aufweist, die im Wesentlichen konzentrisch zu den Absätzen (30, 30', 30", 30"', 31, 31', 31", 31"') angeordnet sind.

6. Ventil nach einem der vorhergehenden Ansprüche,
**dadurch gekennzeichnet,**
**dass** eine Vielzahl von Abströmöffnungen (28) in der Sitzplatte (26) angeordnet ist, die über den gesamten Umfang zwischen den Absätzen (30, 30', 30", 30"', 31, 31', 31", 31"') verteilt sind.

## Claims

1. Valve for controlling a fluid, in particular for controlling a gas, comprising a valve housing (13) which accommodates an actuating unit (14) for a magnet armature (18) which is guided in an axially displaceable manner in the valve housing (13) and is provided with a valve-closing element (20), on the end side of which is arranged a sealing element (29) which interacts in such a manner with a valve seat (21, 21', 21'', 21''') formed on a seat plate (26) that a fluid flow can be controlled by means of discharge openings (28) in the seat plate (26), wherein the valve seat (21, 21', 21'', 21''') is formed by a substantially annular, inner shoulder (30, 30', 30'', 30''') and a substantially annular, outer shoulder (31, 31', 31'', 31'''), and the discharge openings are arranged between the inner shoulder (30, 30', 30'', 30''') and the outer shoulder (31, 31', 31'', 31'''), wherein the shoulders (30, 30', 30'', 30''', 31, 31', 31'', 31''') each have, on the side facing away from the discharge openings (28), an obliquely downwardly sloping outer flank (32, 32', 32'', 32''', 33, 33', 33'', 33''') and the shoulders (30, 30''', 31, 31''') each have, on the side facing the discharge openings (28), an obliquely downwardly sloping inner flank (34, 34''', 35, 35''') which is preferably provided with a radius, **characterized in that** the shoulders (30, 30', 30'', 31, 31', 31'') each have a curved end surface (34, 34', 34'', 35, 35', 35''), and the obliquely downwardly sloping outer flanks (32, 32', 32'', 32''', 33, 33', 33'', 33''') enclose a more acute angle with the end surface of the sealing element (29) than the obliquely downwardly sloping inner flanks (34, 34"', 35, 35''') do in relation to the end surface of the sealing element (29).

2. Valve according to Claim 1, **characterized in that** the obliquely downwardly sloping outer flanks (32, 32', 32'', 32''', 33, 33', 33'', 33''') are each designed as a conical surface.

3. Valve according to Claim 1, **characterized in that** the obliquely downwardly sloping outer flanks (32'', 33'') are each designed with a curved cross section.

4. Valve according to Claim 1, **characterized in that** the inner shoulder (30, 30', 30'') has a cross section which is formed substantially mirror-symmetrically with respect to the cross section of the outer shoulder (31, 31', 31'').

5. Valve according to one of Claims 1 to 3, **characterized in that** the valve seat (21, 21', 21'', 21''') is produced in accordance with a shaping process, such as a turning, grinding or an eroding process, and has ridges (46) which are arranged substantially concentrically with the shoulders (30, 30', 30'', 30''', 31, 31', 31'', 31''').

6. Valve according to one of the preceding claims, **characterized in that** a multiplicity of discharge openings (28) is arranged in the seat plate (26), said discharge openings being distributed over the entire circumference between the shoulders (30, 30', 30", 30''', 31, 31', 31'', 31''').

## Revendications

1. Soupape de commande d'un fluide notamment pour commander un gaz comprenant un boîtier de soupape (13) recevant une unité d'actionnement (14) pour un induit électromagnétique (18) guidé en coulissement axial dans le boîtier de soupape (13) et muni d'un organe d'obturation de soupape (20) dont le côté frontal comporte un élément d'étanchéité (29) coopérant avec un siège de soupape (21, 21', 21", 21'") réalisé dans une plaque formant siège (26) de façon à commander un courant de fluide à travers les orifices de sortie (28) de la plaque formant siège (26),
le siège de soupape (21, 21', 21", 21"') étant formé par un épaulement intérieur (30, 30', 30", 30"') pratiquement annulaire et un épaulement extérieur (31, 31', 31", 31"') pratiquement annulaire et les orifices de sortie étant prévus entre l'épaulement intérieur (30, 30', 30", 30"') et l'épaulement extérieur (31, 31', 31", 31'''),
les épaulements (30, 30', 30", 30"' ; 31, 31', 31", 31"') ayant sur le côté non tourné vers les orifices de sortie (28) chacun un flanc extérieur incliné descendant (32, 32', 32", 32"' ; 33, 33', 33", 33"'), et
les épaulements (30, 30"', 31, 31"') ayant sur le côté tourné vers les orifices de sortie (28), respectivement un flanc intérieur incliné vers le bas (34, 34"', 35, 35"') ayant un rayon,
**caractérisée en ce que**
les épaulements (30, 30', 30" ; 31, 31', 31") ayant chacun une surface frontale bombée (34, 34', 34" ; 35, 35', 35"), et
les flancs extérieurs (32, 32', 32", 32" ;, 33, 33', 33", 33"') inclinés descendant formant un angle plus aigu avec la surface frontale de l'élément d'étanchéité (29) que les flancs intérieurs inclinés descendant (34, 34"', 35, 35"') le font par rapport à la surface frontale de l'élément d'étanchéité (29).

2. Soupape selon la revendication 1,
**caractérisé en ce que**
les flancs extérieurs (32, 32', 32", 32"', 33, 33', 33", 33"') inclinés vers le bas ont chacun une forme de surface conique;

3. Soupape selon la revendication 1,
**caractérisé en ce que**
les flancs extérieurs inclinés vers le bas (32", 33") ont chacun une section bombée.

4. Soupape selon la revendication 1,
**caractérisé en ce que**
l'épaulement intérieur (30, 30', 30") a une section pratiquement symétrique plane par rapport à la section de l'épaulement extérieur (31, 31', 31").

5. Soupape selon les revendications 1 à 3,
**caractérisé en ce que**
le siège de soupape (21, 21', 21", 21"') est réalisé par un procédé d'usinage de forme tel qu'un usinage par un tour, un procédé de meulage ou d'érosion et comporte des moletages (46) pratiquement concentriques aux épaulements (30, 30', 30", 30"', 31, 31', 31", 31"').

6. Soupape selon les revendications précédentes,
**caractérisé en ce que**
de nombreux orifices de sortie (28) sont prévus dans la plaque formant siège (26) et ces orifices sont répartis sur toute la périphérie entre les épaulements (30, 30', 30", 30"' ; 31, 31', 31", 31"').
